(19) Europäisches Patentamt
European Patent Office
Office européen des brevets

(11) **EP 3 634 005 A1**

(12) **EUROPEAN PATENT APPLICATION**

(43) Date of publication:
**08.04.2020 Bulletin 2020/15**

(51) Int Cl.:
***H04N 21/4728*** (2011.01)  ***H04N 5/232*** (2006.01)
***G02B 27/01*** (2006.01)

(21) Application number: **18198943.5**

(22) Date of filing: **05.10.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventor: **RONDAO ALFACE, Patrice**
**2018 Antwerpen (BE)**

(74) Representative: **MERH-IP Matias Erny Reichl Hoffmann**
**Patentanwälte PartG mbB**
**Paul-Heyse-Strasse 29**
**80336 München (DE)**

(54) **CLIENT DEVICE AND METHOD FOR RECEIVING AND RENDERING VIDEO CONTENT AND SERVER DEVICE AND METHOD FOR STREAMING VIDEO CONTENT**

(57) Client device for receiving and rendering encoded video content from a server device, the client device being configured to: determine for pixels of a hitherto accumulated client panorama image a corresponding pixel update priority; determine a region of interest which comprises a plurality of pixels of the hitherto accumulated client panorama image, wherein each pixel of the plurality of pixels has a pixel update priority higher than a priority threshold; determine region of interest information; send the determined region of interest information to the server device; receive an encoded region of interest image and generated region of interest metadata from the server device; decode the encoded region of interest image; determine a combination image by combining the region of interest image with the hitherto accumulated client panorama image; store the determined combination image as an updated hitherto accumulated client panorama image; and render the determined combination image.

FIG. 5

**Description**

Field of Invention

The field of the invention relates to a client device and a server device for streaming video content. Particular embodiments relate to a client device for receiving video content and a cooperating server device for streaming the video content, and methods thereof.

Background

Immersive video experiences enable a user to view a scene from different angles and positions for example with a head-mounted display (HMD). Problems may arise when streaming ultra-high resolution 360° or panoramic video content of that scene to a client device which cannot ingest this content totally due to bandwidth limitations or limited processing capabilities at the client device side.

Compared to traditional video streaming approaches, streaming panoramic video content for immersive video applications may encounter following difficulties.

Only a portion of the 360° video can be seen in the HMD, this is called a viewport or field of view and is typically approximately 90° degrees wide. Accordingly most of the area of the 360° video is not seen or watched by the user. This means that sending the 360° content in 4K resolution, merely results in lower than high definition (HD) resolution in the viewport or field of view area, which is considered to be a significant waste of pixels and bandwidth.

Moreover, the position of the field of view changes in dependency of the user and that position might move quite rapidly. Therefore, this position needs to be known at the server device side in order to be able to optimize encoding for this portion of the 360° video content.

Prior art approaches stream the full 360° video content in 4K resolution by encoding the content as a simple video after the 360° content is mapped on a plane by means of a 2D projection technique, for example an equirectangular projection. However, this results in a very low resolution for the content in the field of view of the user of the HMD which leads to pixelated visual experiences. This significantly impacts the quality of experience of the user and the feeling of immersion in a negative manner.

Besides the basic 360° video streaming through full panorama streaming, prior art approaches have proposed to improve the transmission by maximizing the resolution of the video in the area of the field of view or viewport. These prior art approaches mainly differ in the transmission protocol chosen. Examples include Hypertext Transfer Protocol (HTTP) Adaptive Streaming (HAS) or Region Of Interest (ROI) direct streaming via Real-time Transport Protocol (RTP). These two classes of prior art approaches exhibit different magnitudes of latency that impact the video encoding negatively in a different manner. Hence, in HAS the client device pulls the tiles that are needed to cover a large area around the viewport position, and in addition a low resolution tile that covers the entire 360° sphere. This leads to a user seeing a pixelated field of view when moving away from his or her initial position. Meanwhile several high resolution tiles have been downloaded which do not cover the correct portion of the sphere which is seen by the viewer. In a similar manner, ROI direct streaming approaches send low resolution full 360° content to enable a fallback or safety net in case the user would move too fast away from the known viewport position. Therefore these prior art approaches result in a waste of bandwidth and a high risk of the user falling back on a pixelated viewport.

Not yet published European Patent application EP18152612.0 in name of the Applicant describes a server device and client device for streaming video content which provide advantages in view of required bandwidth, image quality and/or quality of experience for the user.

Summary

The object of embodiments is to provide a client device for receiving and rendering video content and a server device for streaming video content which further improves the client device and server device as set out in not yet published EP18152612.0. More in particular, the object of embodiments is to provide a client device and a cooperating server device which allow to stream video content in a way such that less bandwidth is required and/or to stream video content in a way which results in an improved quality of images at the client device side and/or in an improved quality of experience for the user, especially lower latency Moreover less encoding complexity is further envisaged.

According to a first aspect there is provided a client device for receiving and rendering encoded video content from a server device, the client device comprising:

- at least one processor; and
- at least one memory including computer program code;
  the at least one memory and the computer program code configured to, with the at least one processor, cause the client device at least to perform: - determine for pixels of a hitherto accumulated client panorama image a corresponding pixel update priority;

- determine a region of interest such that the region of interest comprise a plurality of pixels of the hitherto accumulated client panorama image, wherein each pixel of the plurality of pixels has a pixel update priority which is higher than a priority threshold;
- determine corresponding region of interest information;
- send the determined region of interest information to the server device;
- receive an encoded region of interest image and generated region of interest metadata from the server device;
- decode the encoded region of interest image;
- determine a combination image by combining the region of interest image with the hitherto accumulated client panorama image based on the generated region of interest metadata;
- store the determined combination image as an updated hitherto accumulated client panorama image; and
- render the determined combination image.

According to a second aspect, there is provided a server device for streaming encoded video content to a client device, the server device comprising:

- at least one processor; and
- at least one memory including computer program code;
  the at least one memory and the computer program code configured to, with the at least one processor, cause the server device at least to perform:

  - obtain from the video content a video image;
  - receive region of interest information from the client device;
  - extract a region of interest image from the obtained video image based on the received region of interest information;
  - encode the extracted region of interest image;
  - decode the encoded region of interest image;
  - determine a combination image by combining the decoded region of interest image with a hitherto accumulated client panorama image;
  - store the determined combination image as an updated hitherto accumulated client panorama image; and
  - send the encoded region of interest image to the client device.

Embodiments are based *inter alia* on the insight that by determining a region of interest and region of interest information, communication between the client device and server device may be dedicated to a region of interest image and corresponding metadata. The region of interest is defined as a plurality or group of pixels, whereas the region of interest information defines an identifier for the region of interest pixels. The region of interest information may for example comprise the coordinates of the left hand top pixel of the region of interest along with the dimensions of the region of interest when the region of interest is a group of mutually adjacent pixels. However, it is clear to the skilled person that many other forms of identifiers may be comprised in the region of interest information. In this manner, as compared with sending an entire 360° panorama image of a scene, less bandwidth is required for communication between de server device and the client device. Moreover, this allows for the region of interest image to be encoded in a better quality as compared to prior art approaches and allows for the encoded region of interest image to be sent with a higher resolution. In this manner, the quality of experience of a user is improved. In addition, by storing an hitherto accumulated client panorama image, and updating this hitherto accumulated client panorama image based on the extracted region of interest image, both the client device and the server device can keep track of which information regarding the scene is available to the client device. The hitherto accumulated client panorama image corresponds with a 360° panorama image which is available at the client device, and is composed by combining high quality or high definition region of interest images which have been provided to the client device by the server device on request of the client device. These high definition region of interest images are determined at the server device based on a region of interest and corresponding region of interest information determined at the client device. In other words, relatively small high quality region of interest images are used to fill or "paint" the relatively large client panorama image. The client device advantageously determines for pixels of the hitherto accumulated client panorama image a corresponding pixel update priority which is representative for how "urgently" a pixel value should be updated or (re)filled in view of data transmission optimization between the server device and client device. Consequently, pixels of the hitherto accumulated client panorama image for which the determined pixel update priority is relatively high, e.g. as compared to a priority threshold, will be comprised in the determined region of interest which will be sent to the server device in order to request a region of interest image which is used to update the hitherto accumulated client panorama image. Because the client device is exposed to a lower latency when determining a region of interest as compared to the server, the region of interest can be determined in an optimized manner. In other words, the client device is able to directly request region of interest images from the server device such that pixels of the hitherto accumulated client panorama image are updated and/or (re)filled in an efficient manner. Consequently, a quality of experience of the user of the client device will improve as compared to the described prior art approaches in view of lower latency

Especially, when the video content comprises a sequence of video images regarding a substantially static panorama, with optionally one or more moving objects within the substantially static panorama, the above described client device and server device will, in cooperation, allow for a better image quality at the client device side, while lowering the amount of bandwidth used. In other words, proposed embodiments will demonstrate clear advantages over prior art approaches, especially regarding applications which use one or more fixed video cameras. In an embodiment the region of interest which is determined by the client device is different from an actual field of view of the user of the client device. Although this might seem contra intuitive, it has been found that such manner of filling or updating the client panorama image is beneficial in terms of latency encountered at the client device.

In an embodiment, the at least one memory and the computer program code are further configured to, with the at least one processor, cause the client device at least to determine for pixels of the hitherto accumulated client panorama image a corresponding pixel activity, wherein the pixel activity is representative for a change in pixel value over time, and wherein the pixel update priority is determined based on at least the pixel activity of the respective pixel.

In this manner, by taking into account the change in pixel value over time, the client device can estimate how accurate the current pixel value of the respective pixel is and consequently can decide whether or not to incorporate the respective pixel in the region of interest.

In another embodiment, the at least one memory and the computer program code are further configured to, with the at least one processor, cause the client device at least to determine pixel activity based on a period of time which has passed since the pixel value of the respective pixel was last updated.

In this manner, for example, when a pixel value has not changed for a relatively long period of time, it might be interpreted as an indication that the pixel value should be updated. However, when the respective pixel corresponds with a substantially static part of the hitherto accumulated client panorama image, the current pixel value might still be accurate, despite not having changed for a relatively long period of time.

In a preferred embodiment, the at least one memory and the computer program code are further configured to, with the at least one processor, cause the client device at least to determine pixel activity based on a probability that the respective pixel will be associated with a moving object.

In this manner, the client device can determine that the respective pixel should be updated when probability is high that the respective pixel will be associated with at least a part of a moving object. Furthermore this allows for the region of interest to be determined in an efficient manner. Changes in (parts of) the panoramic scene may occur locally and/or globally and can for example be caused by moving objects within the panoramic scene, or by changing light conditions such as those caused by moving clouds in an outdoor panoramic scene.

In another possible embodiment, the at least one memory and the computer program code are further configured to, with the at least one processor, cause the client device at least to determine pixel activity based on the pixel value of the respective pixel being empty.

In this manner, an empty pixel can be seen to correspond with a low pixel activity since the pixel value has not been filled yet. However, in view of optimizing compression gains while sending region of interest images from the server device to the client device, it is advantageous that the empty pixel values are filled.

In a further developed embodiment, the at least one memory and the computer program code are further configured to, with the at least one processor, cause the client device at least to determine a field of view, wherein the field of view corresponds with a plurality of pixels of the hitherto accumulated client panorama which can be seen by a user of the client device; to determine for pixels of the hitherto accumulated client panorama image a corresponding pixel probability, wherein the pixel probability is representative for a probability that the respective pixel will be comprised in a future field of view, based on at least one previously determined field of view; and to determine for pixels of the hitherto accumulated client panorama image the pixel update priority based on at least the determined corresponding pixel probability.

In this manner, an additional factor of probability is taken into account in determining the region of interest. More in particular, by taking into account one or more previously determined field of views, a future field of view may be estimated. In other words, depending on a viewing behaviour of a user of the client device, it may be estimated which part of the hitherto accumulated client panorama image will be viewed by the user in the (near) future. Such pixel probability is advantageously used by the client device in determining the region of interest, i.e. pixels of the hitherto accumulated client panorama image which are to be updated.

In another embodiment, the at least one memory and the computer program code are further configured to, with the at least one processor, cause the client device at least to determine the pixel probability based on at least one statistical parameter related to the at least one previously determined field of view wherein the at least one statistical parameter comprises any one of a positional bias, convergent speed bias, divergent speed bias.

In this manner, the pixel probability can be determined in an accurate and efficient manner. Moreover, these biases may be accurately determined substantially in real-time by the client device by means of client device sensors such as motion sensors, eye-tracking sensors, gyroscopes, etc. As an example, the client device may have access to user viewing angles based on a client device sensor at a rate which is higher than the framerate of rendering or updating the hitherto accumulated client panorama image.

In a further developed embodiment, the at least one memory and the computer program code are further configured to, with the at least one processor, cause the client device at least to determine pixel activity based on a period of time which has passed since the pixel was comprised in a region of interest.

In this manner, for example, when only a relatively short period of time has passed since the pixel was comprised in a region of interest, it might be interpreted as an indication that the pixel value is still up to date. However, when the respective pixel corresponds with a substantially dynamic part of the hitherto accumulated client panorama image, the current pixel value might still need to be update, despite being comprised in a region of interest not so long ago.

In an embodiment, the at least one memory and the computer program code are further configured to, with the at least one processor, cause the client device at least to determine the region of interest based on at least one of pixel update priority and amount of overlap with the previously determined region of interest.

In this manner, the client panorama image may be updated and/or (re)filled in an efficient manner. Determining the region of interest while taking into account an amount of overlap with the previously determined region of interest is particularly advantageous when it is expected that a user of the client device will gradually move through the client panorama image while viewing without making any rash movements, e.g. turn his or her head for 180°.

In a further embodiment, the encoded region of interest image is an adapted region of interest image and wherein the at least one memory and the computer program code are further configured to, with the at least one processor, cause the client device at least to determine a combination image by combining the adapted region of interest image with the hitherto accumulated client panorama image.

In this manner, bandwidth may be used in an efficient manner since the server device is aware of the client panorama image which is stored at the client device. In stead of encoding the extracted region of interest image, encoding the adapted region of interest image, which may correspond to a differential region of interest image, allows for a more efficient use of bandwidth while sending the adapted region of interest image to the client device.

In another embodiment, the at least one memory and the computer program code are further configured to, with the at least one processor, cause the client device at least to determine a plurality of regions of interest; and to send the determined plurality of regions of interest in burst to the server device.

In this manner, particularly during initialisation of a client panorama image, the client panorama image may be filled in a quick and efficient manner.

It will be understood by the skilled person that the features and advantages disclosed hereinabove with respect to various embodiments of the client device may also apply, *mutatis mutandis,* to various further embodiments of the server device according as described below.

In an embodiment, the encoded region of interest image is an adapted region of interest image and a combination image is determined by combining the adapted region of interest image with the hitherto accumulated client panorama image based on the generated region of interest metadata.

In this manner, bandwidth may be used in an efficient manner since the server device is aware of the client panorama image which is stored at the client device. In stead of encoding the extracted region of interest image, encoding the adapted region of interest image, which may correspond to a differential region of interest image, allows for a more efficient use of bandwidth while sending the adapted region of interest image to the client device.

In another embodiment, the at least one memory and the computer program code are further configured to, with the at least one processor, cause the server device at least to perform:

- receive a plurality of region of interest informations in burst from the client device;
- extract a plurality of corresponding region of interest images from the obtained video image;
- encode the plurality of extracted region of interest images;
- decode the plurality of encoded region of interest images;
- determine the combination image by combining the decoded plurality of region of interest images with the hitherto accumulated client panorama image; and
- send the encoded plurality of region of interest images in burst to the client device.

In a preferred embodiment, the at least one memory and the computer program code are further configured to, with the at least one processor, cause the server device at least to perform:

- compare the extracted region of interest image with a corresponding section of the hitherto accumulated client panorama image, and determine an adapted region of interest image based on a difference between the extracted region of interest image and the corresponding section of the hitherto accumulated client panorama image;
- encode the adapted region of interest image;
- decode the encoded adapted region of interest image;
- determine a combination image by combining the decoded adapted region of interest image with the hitherto accumulated client panorama image;
- store the determined combination image as an updated hitherto accumulated client panorama image; and
- send the encoded adapted region of interest image to the client device.

According to another aspect of the present invention, there is provided a video streaming assembly comprising a client device cooperating with a server device according to any one of the above described embodiments.

It will be understood by the skilled person that the features and advantages disclosed hereinabove with respect to various embodiments of the server device and various embodiments of the client device may also apply, *mutatis mutandis,* to various embodiments of the video streaming assembly.

According to another aspect of the present invention, there is provided a method for receiving and rendering encoded video content from a server device, the method comprising the steps of:

- determine for pixels of a hitherto accumulated client panorama image a corresponding pixel update priority;
- determine a region of interest such that the region of interest comprise a plurality of pixels of the hitherto accumulated client panorama image, wherein each pixel of the plurality of pixels has a pixel update priority which is higher than a priority threshold;
- determine corresponding region of interest information;
- sending the determined region of interest information to the server device;
- receiving an encoded region of interest image and generated region of interest metadata from the server device;
- decoding the encoded region of interest image;
- determining a combination image by combining the region of interest image with the hitherto accumulated client panorama image based on the generated region of interest metadata;
- storing the determined combination image as an updated hitherto accumulated client panorama image; and
- rendering the determined combination image.

It will be understood by the skilled person that the features and advantages disclosed hereinabove with respect to various embodiments of the client device may also apply, *mutatis mutandis,* to various embodiments of the method for receiving and rendering encoded video content.

According to another aspect of the present invention, there is provided a method for streaming encoded video content to a client device, the method comprising the steps of:

- obtaining from the video content a video image;
- receiving region of interest information from the client device;
- extracting a region of interest image from the obtained video image based on the received region of interest information;
- encoding the extracted region of interest image;
- decoding the encoded region of interest image;
- determining a combination image by combining the decoded region of interest image with a hitherto accumulated client panorama image;
- storing the determined combination image as an updated hitherto accumulated client panorama image; and
- sending the encoded region of interest image to the client device.

It will be understood by the skilled person that the features and advantages disclosed hereinabove with respect to various embodiments of the server device may also apply, *mutatis mutandis,* to various embodiments of the method for streaming encoded video content.

Further aspects are described by the dependent claims. The features from the dependent claims, features of any of the independent claims and any features of other dependent claims may be combined as considered appropriate to the person of ordinary skill in the art, and not only in the particular combinations as defined by the claims.

Brief description of the figures

The accompanying drawings are used to illustrate presently preferred non-limiting exemplary embodiments of devices. The above and other advantages of the features and objects will become more apparent and the proposed subject-matter will be better understood from the following detailed description when read in conjunction with the accompanying drawings, in which:

Figure 1 schematically illustrates an embodiment of a client device for receiving and rendering encoded video content;
Figure 2 schematically illustrates a further embodiment of a client device for receiving and rendering encoded video content;
Figures 3A, 3B and 3C schematically illustrate the determination of pixel probability according to an embodiment of a client device;
Figure 4 schematically illustrates the determination of a pixel activity according to an embodiment of a client device;
Figure 5 schematically illustrates the determination of a pixel update priority according to an embodiment of a client device;
Figure 6 schematically illustrates an embodiment of a server device for streaming video content;
Figure 7 schematically illustrates filling patterns of a panorama image according to an embodiment of a client device;
Figure 8 schematically illustrates filling patterns of a panorama image according to a further embodiment of a client device; and
Figure 9 is a flowchart illustrating a process of sending a plurality of region of interest information in burst according to an embodiment of a client device.

Description of embodiments

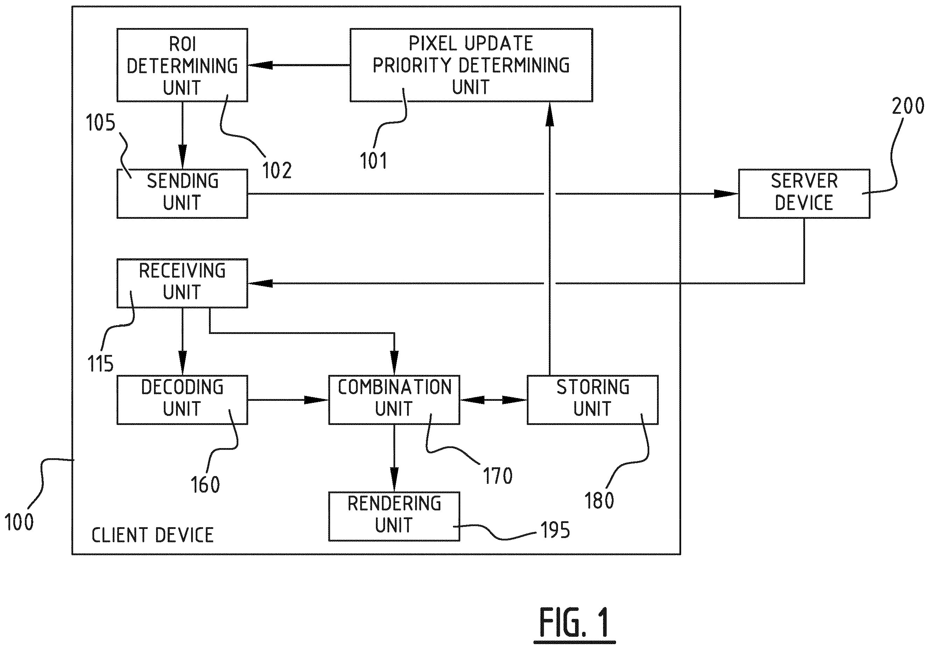

Figure 1 schematically illustrates an embodiment of a client device 100 for receiving streamed video content. More in particular, figure 1 illustrates a client device 100 for receiving streamed video content regarding a scene from a server device 200. For illustrative purposes the specifications of the client device 100 are described via functional units, however it is clear to the skilled person that the specifications of the functional units may be provided by means of one or more processors in combination with computer program code stored in one or more memory. The client device 100 comprises a unit 102 to determine a region of interest and corresponding region of interest information. The determined region of interest may correspond with a plurality of adjacent pixels, however alternatively or in addition the region of interest may correspond with configurations of pixels which are not mutually adjacent. The client device further comprises a unit 101 configured to determine for pixels of a hitherto accumulated client panorama image a corresponding pixel update priority. The hitherto accumulated client panorama image corresponds with the image that is available at the client device and is or has been rendered to be viewed by a user of the client device. For the sake of illustration the hitherto accumulated client panorama image may be regarded as to correspond with a video frame at a first instance in time, denoted $T_0$. The region of interest is determined to comprise a plurality of pixels of the hitherto accumulated client panorama image at $T_0$, wherein each pixel of the plurality of pixels has a pixel update priority which is higher than a priority threshold. The pixel update priority is representative for how urgently a pixel value should be updated or (re)filled in view of image quality, compression rate and/or quality of experience of a user of the client device 100. Pixel update priority may be determined in different manners, for example based on a pixel activity and/or on a pixel probability which will be further elaborated below. The client device 100 further comprises a unit 105 configured to send the determined region of interest information to the server device 200, corresponding with the region of interest in the client panorama image at $T_0$. When the client device 100 is a HMD, the region of interest information may comprise an identifier of the pixels within the determined region of interest, optionally along with client command data being indicative for the orientation of the HMD, the view direction or a line of sight of the user of the HMD, etc. The server device 200 will extract a region of interest image from the available video content based on the region of interest information, corresponding with the region of interest in the client panorama image at $T_0$, sent by the client device 100, and consequently encode and send the extracted region of interest image to the client device 100, optionally along with generated region of interest metadata. At the client device 100, the unit 115 is configured to receive the encoded region of interest image along with the optionally generated region of interest metadata from the server device 200. In addition, the client device 100 comprises a decoding unit 160, combination unit 170 and storing unit 180. More in particular, the unit 160 is configured to decode the encoded region of interest image, the unit 170 is configured to determine a combination image, which may be regarded as corresponding to a video frame at a next instance in time, which may be (but is not limited to) the following timing instance $T_1$ (= $T_0$ + 1). However this can also be any other value e.g. a next timing window $T_0+k$, wherein k in an embodiment being may be any one of 1, 2, 3, 4, 5, 6, etc. The combination image is determined by combining the region of interest image with the hitherto (at time $T_0$) accumulated client panorama image based on the generated region of interest metadata, and the unit 180 is configured to store the determined combination image as an updated hitherto accumulated client panorama image, corresponding to a video frame at time instance $T_1$. The client device 100 provides a closed loop functionality to decode region of interest images, combine the decoded region of interest images with the stored hitherto accumulated client panorama image and accordingly update the hitherto accumulated client panorama image.

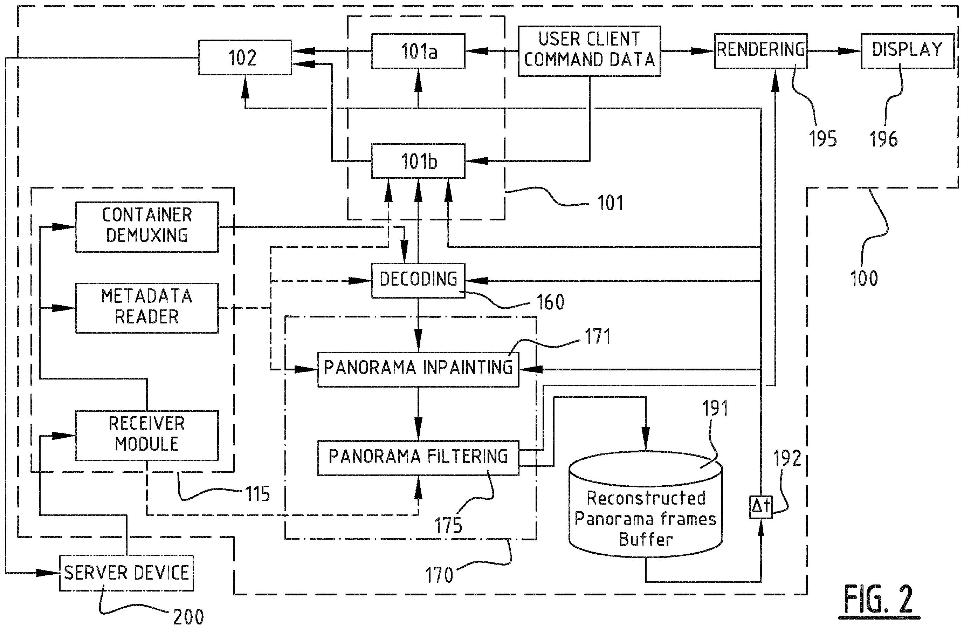

In this manner it is guaranteed that there is no difference or drift between the server device images and the client device images. In an embodiment, the encoded region of interest image may be an adapted region of interest image, e.g. differential region of interest image, and the unit 170 is configured to determine a combination image by combining the adapted region of interest image with the hitherto accumulated client panorama image representing the scene based on the generated region of interest metadata. The client device 100 further comprises a rendering unit 195 configured to render the determined combination image and may also include a display unit 196(see figure 2, not shown in figure 1) which is configured to display the rendered combination image to the user of the client device 100.

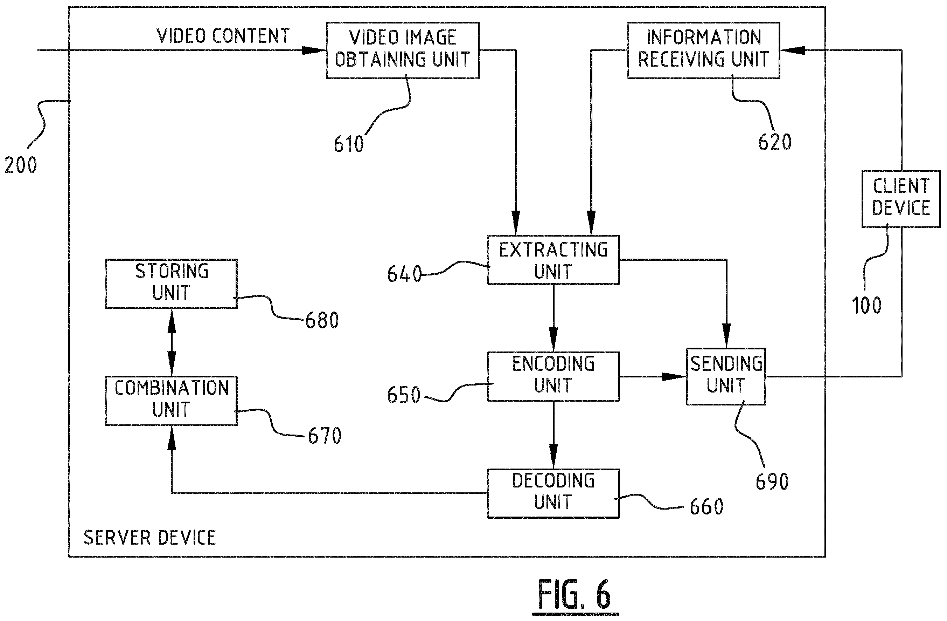

Figure 2 illustrates a further embodiment of a client device 100 wherein the region of interest and region of interest information is determined in unit 102 based on a pixel update priority as determined by unit 101. In the illustrated embodiment the pixel update priority is determined based on both a pixel probability as determined in unit 101a and a pixel activity as determined in unit 101b. However, it is clear to the skilled person that in alternative embodiments the pixel update priority may be determined based on either the pixel probability 101a or the pixel activity 101b. In the embodiment of figure 2 the determined region of interest and associated region of interest information is determined and sent to server device 200. Based on this information the server device 200 will extract from a video image a corresponding region of interest image, as will be further elaborated in connection with figure 6, encode the region of interest image and provide this encoded region of interest image to the client device 100, optionally along with corresponding metadata. The region of interest image and optionally the corresponding metadata are received and processed by receiving unit 115 which may include a demuxer and/or a metadata reader. The encoded region of interest image is then decoded at a decoder 160, after which the decoded region of interest image is used to update, accumulate, (re)fill or inpaint the hitherto accumulated client panorama image. This is done at module 170 which comprises a panorama inpainting unit 171, and optionally a panorama filtering unit 175 which is configured to perform some panorama filtering before sending the updated client panorama image to a buffer 191, after which rendering 195 and display 196 of the accumulated client panorama image is performed. Module 192 is an optional module which introduces a time difference Δt which may improve synchronisation according to further developed embodiments. Moreover, the arrow from unit 192 to decoding module 160 is optional and in the illustrated embodiment of figure 2 this arrow allows for decoding the encoded adapted region of interest image, which may correspond to a differential region of interest image with respect to the hitherto accumulated client panorama image, and thereby allows for a more efficient use of bandwidth while sending the adapted region of interest image to the client device.

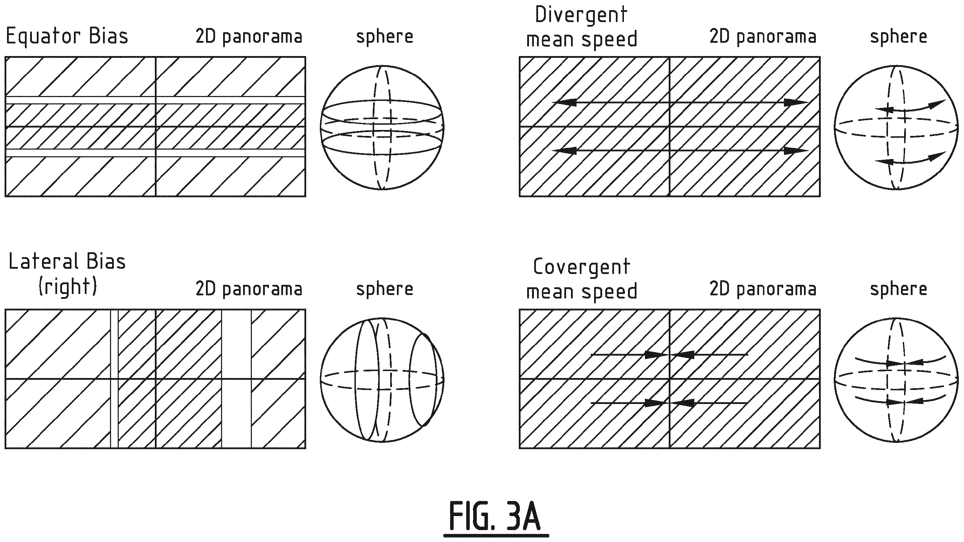

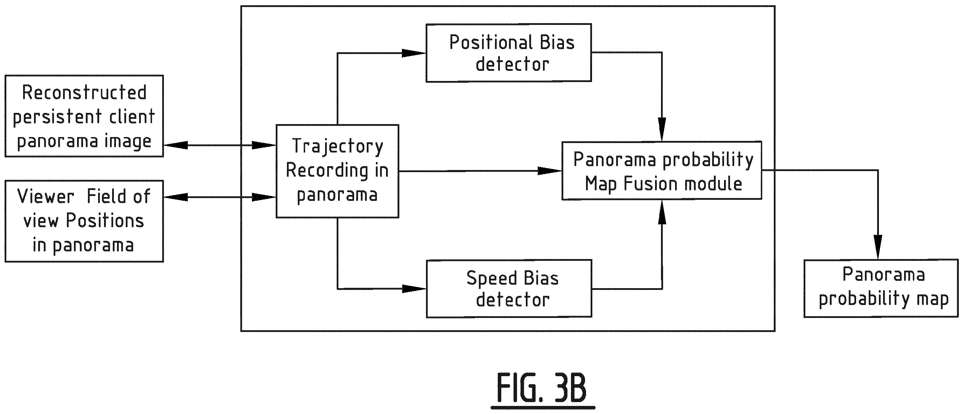

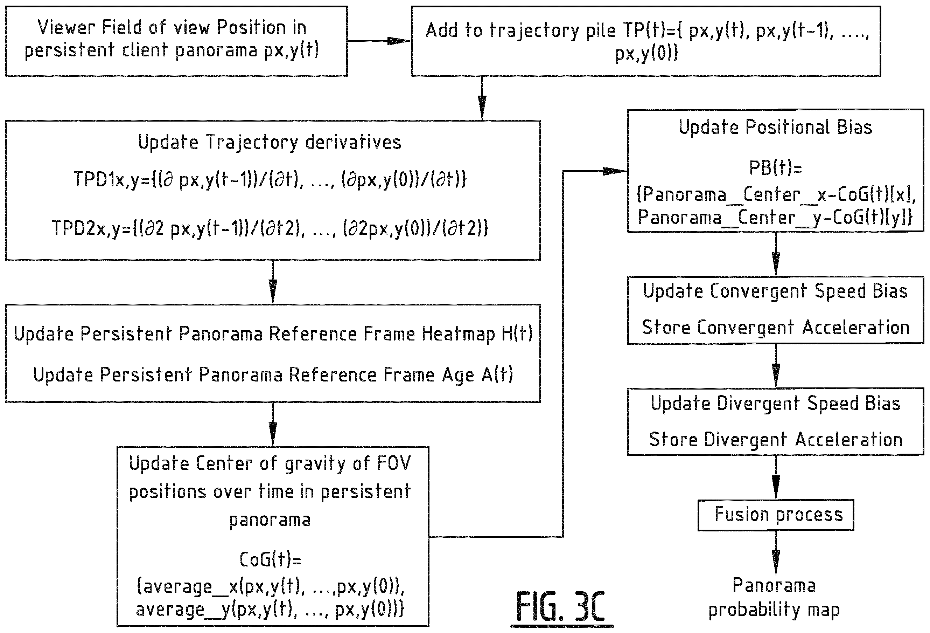

Figures 3A, 3B and 3C illustrate the determination of pixel probability, based on which a pixel update priority may be determined. This process of determining a pixel probability may be performed at an initialization phase when no client panorama image has been accumulated yet. Alternatively or in addition, this process of determining a pixel probability may be performed during a streaming session when a hitherto accumulated client panorama image is available. More in particular, figure 3A illustrates which parameters or statistics may be useful in determining a pixel probability in the context of 360° panorama viewing, figure 3B illustrates schematically how the parameters of figure 3A may be used to determine a pixel probability, and figure 3C illustrate in more detail an exemplary embodiment of determining a pixel probability. The client device may request region of interest positions at the initialization of the video transmission. It has been found that some patterns of region of interest trajectories requests at initialization time enable to populate the client panorama image in for example less than a second and enable compression gains of up to 30% in BD-rate for various types of 360° content for a 4K resolution. Results also show that the encoding complexity is lower thanks to this approach. This can be observed also for 360° degrees video with a moving camera position when the camera movement is relatively linear, for example a 360° camera on top of a car that drives on a traffic lane, and that the request pattern of regions of interest favours parts of the content that are in the direction of the camera motion trajectory. In an embodiment, this direction may be flagged by some metadata or manifest file at initialization time as well to the client by the server.

As illustrated in figure 3A, though, users of the client device tend to have different ways of watching 360° content. Some users or viewers are more interactive, moving all the time, some users are more static, some users focus substantially on the equator and substantially not on the poles, etc. For one and the same viewer, the behaviour can also change over time depending on the actual content. It has been found that, a user interacts the most during the first thirty seconds of a 360° session. It follows that based on this information, not all areas of the persistent panorama have the same priority to be (pre)filled for a particular viewer for a particular content and elapsed time of a 360° session. Determining the pixel probability relies on client device-based monitoring of the users viewing behaviour to optimize region of interest requests that will efficiently (pre)fill the persistent client panorama image. Although this approach might be efficient at initialization time and after a scene cut, wherein sudden changes in orientation of the user or in video content require a refill of the client panorama image, this approach may also be used during the session as well as when it is observed that the user changes his or her behaviour.

By providing this functionality at the client device, it is possible to specialize and optimize a fast (pre)filling of the persistent client panorama image at initialization time and during the visualization session, because the decision is taken as close as possible to the user of the client device. For example, the client device has access to all user viewing angles based on sensors of the client device, at a rate which typically is higher than the framerate of the video content.

In this manner, the client device has a much finer and accurate estimation of the user interactions as compared to the server device based on merely the received region of interest information. The client device is exposed to a lower latency when taking decisions regarding pixel probability and pixel update priority based on actual user interactions that occur on the client device. In a further developed embodiment the client device may have eye-tracking capabilities that further refine the knowledge that the client device may use in determining a pixel probability. Visualization patterns may differ between users, as illustrated in figure 3A. However, it is possible to characterize the biases of the specific user visualization style to determined a pixel probability and optimize the transmission of a region of interest image based on this information. In embodiments, it is possible to store the visualization style of the user for example in the cloud or to detect whether the client device, e.g. an HMD, is being used by another user based on for example a drastic change in the visualization style. The client device according to embodiment is able to observe and store features of the visualization style of the current user of the client device to produce a panorama probability map, which maps the pixels of the client panorama image to the corresponding determined pixel probabilities. Throughout the 360° session, viewer field of view positions are recorded and statistics on the recorded trajectories of the field of view of a user are collected as illustrated in figure 3B. The types of statistics which may be computed are tailored to 360° viewing as illustrated in figure 3A. More in particular, positional and speed biases may be determined, i.e. the non-isotropic or non-uniform nature of the users viewing style in general and for a given video content. From these field of views positions in the panorama and the user stats, a pixel probability may be determined and the corresponding panorama probability map can be calculated. Preferably, the pixel probabilities are updated at the same temporal resolution as the video playout, i.e. preferably one update per persistent updated client panorama image frame. Such resulting panorama probability map is defined and personalized for the current content and for a particular user feature set aimed to be stored locally or in the cloud. More precisely, referring to figure 3C, a panorama probability map is outputted which contains for each pixel, or each block of NxN pixels (N being set as a parameter of the system), of the persistent panorama, the pixel probability that it will be present or contained or covered in a viewer's field of view. Discriminating divergent from convergent speed measurements is done as follows:

$$convergent\ speed:\ \overrightarrow{\left(p_{x,y}(t) - origin_{x,y}(t)\right)} \cdot \overrightarrow{\frac{\partial p_{x,y(t)}}{\partial t}} \geq 0$$

$$divergent\ speed:\ \overrightarrow{\left(p_{x,y}(t) - origin_{x,y}(t)\right)} \cdot \overrightarrow{\frac{\partial p_{x,y(t)}}{\partial t}} < 0$$

In alternative embodiment, the origin can be set as the centre of the client panorama or as the current centre of gravity of the viewer field of view position recorded from the start of the session, or to a temporal windowed centre of gravity of the viewer field of view position. The persistent panorama reference frame age in figure 3C may be computed as follows. If a pixel (x,y) is present in the current viewer field of view position (p(t)), set the persistent panorama reference frame age of the pixel to zero (A(t,x,y) = 0). If the pixel (x,y) is not present in the current viewer field of view position (p(t)), increment the persistent panorama reference frame age of the pixel with 1 (A(t,x,y) = A(t-1,x,y) +1).

In an embodiment the fusion step in figures 3B and 3C intends to use all collected statistics and the current reconstructed client panorama reference frame to derive a panorama probability map of which parts of the sphere will be more likely viewed by the user in the next coming frames. This process does not use information on the original video content located at the server device, but rather personalizes the panorama probability map to the user and his or her particular way of consuming 360° content. In a possible embodiment the panorama probability map is derived directly from the panorama heatmap collected in the statistics, but this approach only uses positional information. In a preferred embodiment a Kalman filter is used to construct the panorama probability map. In such approach, both position and speed, or merely position can be used. It is also possible to add a control matrix and vector that take into account the acceleration and whether the position at that moment is in a region that was already seen before, and if so, at what time, i.e. age of the last pixel update.

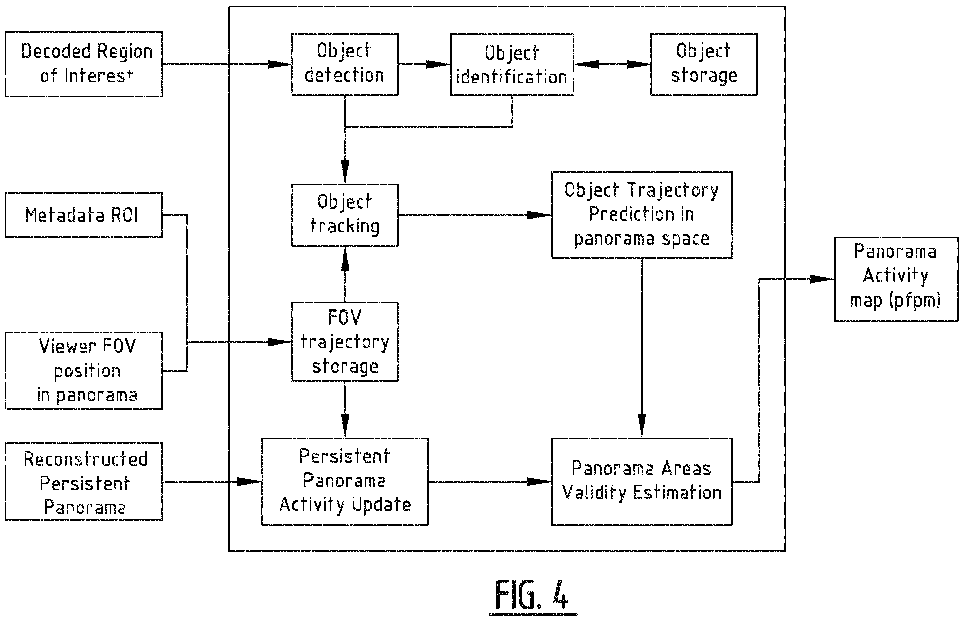

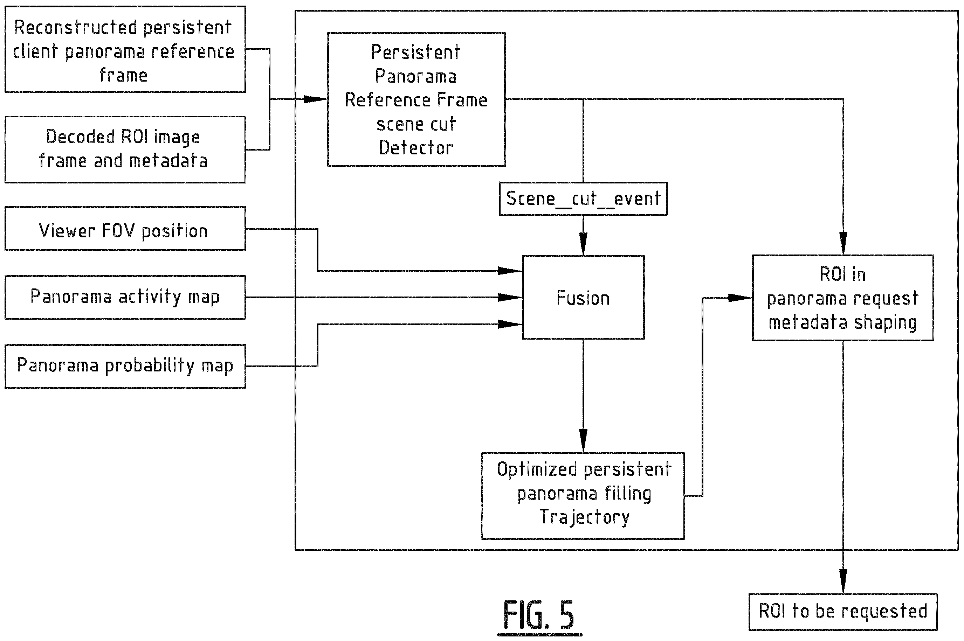

The resulting panorama probability map can be taken into account to determine a pixel update priority and consequently to determine a region of interest, either in isolation or in combination with a pixel activity. An exemplary embodiment of determining a pixel activity is illustrated in figure 4, whereas figure 5 illustrates a possible embodiment of combining both pixel probability and pixel activity.

Figure 4 illustrates an exemplary embodiment of determining a pixel activity based on decoded regions of interest images, the corresponding metadata, and the hitherto accumulated client panorama image, and for example the detection of a moving object. This corresponds with the functionality of unit 101b of figure 2. The aforementioned data is taken as input, optionally together with the viewer's interactions. The presence of moving objects, wherein movement is considered as movement relative to the field of view trajectory, is detected in the current region of interest in order to detect whether this could have an impact on the persistent panorama. Indeed, if a moving object is detected and tracked for example exiting the region of interest area towards the lower region of interest boundary, it follows that the pixel values from the persistent client panorama in that area will likely no longer be correct i.e. close to the pixel values of the pixels that are located in that area in the video content at the server device. Pixels within this area in the persistent client panorama therefore should receive a higher pixel activity and consequently a higher priority to be refilled, even if it looks more probable based on the user behavior that the user will focus on a different area of the client panorama image in the next frame(s). It is therefore preferred to balance both aspects of pixel probability and pixel activity. Is a given area of the persistent panorama likely to be observed by the viewer in the next frames, i.e. pixel probability, and is a given area of the persistent client panorama no longer up to date because of a moving object or other type of appearance changes, like local illumination, shadows, and the like, i.e. pixel activity. In figure 4 objects are detected and tracked. To that aim an identifier is added to the object and stored. Object may be understood as a region of pixels that share common appearance or reflection properties. For all objects detected in the current region of interest the relative motion compared to the current field of view trajectory is detected and the regions of the persistent client panorama that will be impacted by this motion are analyzed as well as the age of the pixels, i.e. the period of time that has passed since the corresponding pixel value was updated or filled, of the client panorama image in the panorama areas validity estimation step of figure 4. This step outputs a panorama activity map that consists in a combination of both reference pixel age and moving object trajectory, and which maps each pixel of the client panorama image to its corresponding pixel activity. In an exemplary embodiment the panorama activity map may be determined in the following manner:

*Step 1*

*For each pixel position of the persistent client panorama (i,j) do*

    *If persistent panorama pixel is empty*

        *Set panorama activity map pixel to max: PFPM(i,j) = max*

    *Else*

        *set activity map pixel equal to its age in panorama: PFPM(i,j) = A(i,j)*

*End_for*

*Step 2*

*For each current tracked object o(k) do*

    *For each persistent panorama pixel (i,j) inside object next probable position area*

*opa(k) do*

        *Set activity map pixel equal to max: PFPM(i,j) = max*

    *End_for*

*End_for*

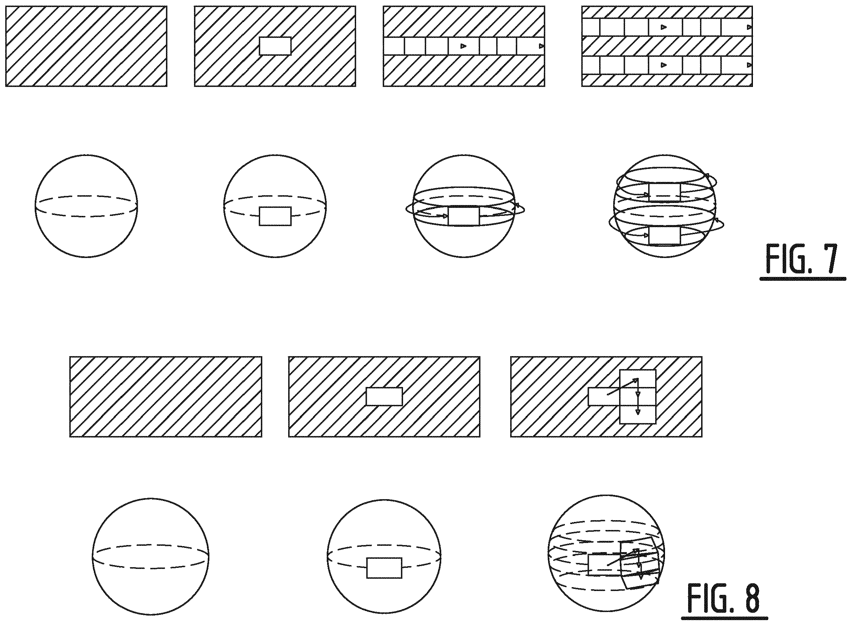

In the embodiment of figure 2 both the determined pixel activity 101b and pixel probability 101a are input in unit 102 for determining the region of interest. This functionality is further illustrated in figure 5 where based on the panorama activity map and panorama probability map and the current persistent panorama, e.g. in order to detect scene cuts, a set of region of interest (ROI) requests are made to (pre)fill and/or update the persistent client panorama. These ROI request positions can be different from the current observed viewer FOV positions. In figure 5 the panorama probability map, the panorama activity map and reconstructed panorama frame are taken as input. The detection of the scene cut event, which would require a refill of the client panorama image, is made by computing whether the update of all pixels that are included in the new region of interest on the persistent reconstructed panorama is larger than a predefined threshold for a temporal window of several frames, i.e. it is checked whether the data on the persistent client panorama image is no longer relevant and would lead to poor compression performance, or if those pixels have a pixel age, i.e. period of time since the last update of the corresponding pixel value, above a given threshold. In another embodiment it is detected whether the incoming bitrate is higher than a predefined threshold in case the encoding at the server device is not using constant bitrate encoding and whether the average age of the persistent panorama pixels is above a given threshold. A possible derivation of a preferred filling pattern is illustrated in figures 7 and 8.

The panorama fused map, which is the fusion of the panorama probability map and of the panorama activity map, is a mapping of pixels to their corresponding pixel update priority. This fused map is used then to determine region of interests and corresponding region of interest information which are to be requested in order to most efficiently fill the client panorama image. In an embodiment, this fused map may be derived as follows:

*For each pixel position (i,j) in persistent panorama,*

*If panorama activity map PFPM(i,j) > priority_threshold*

*If probability map PM(i,j) > probability_threshold*

*Set Fused map set to max FM(i,j) = max*

*Else If PM(i,j) < probability_threshold*

*Set Fused map to medium: FM(i,j) = medium*

*Else If PFPM(i,j) < priority_threshold*

*If PM(i,j) > probability_threshold*

*Set Fused map to low: FM(i,j) = low*

*If PM(i,j) < probability_threshold*

*Set Fused map to zero: FM(i,j) = 0*

*End_for*

The rationale behind these algorithms is that if the content is very static, the fused map may be dominated by the probability map. This is the case as no moving objects are detected or tracked and that the PFPM values are equal to the age of their corresponding pixels in the persistent panorama. In the example of a moving object in a very static background, once filled, the persistent panorama should rather update probable next positions of the object in the persistent panorama than the next probable viewport position that the user will watch. In more complex use cases, the probability map dominates again by setting Fused maps values to max. It is clear to the skilled person that it will depend on the actual use case how the probability map may be combined with the activity map.

An alternative embodiment to this approach would take into account the panorama heatmap computed in the in figure 3C. It could be that some users never watch the poles or behind them, it is therefore less urgent to fill those areas. On the other hand, if the heatmap is high in some panorama area, and if the filling priority is high, then whatever the probability map, the fused map value should be set to high. In case the user field of view is not moving for some time, the heatmap is peaking at this position and in case moving objects are detected, it is useful to drive the fused map based on this information rather than on the probability map, which will be less informative. Again, it is clear to the skilled person that it will depend on the actual use case how the probability map may be combined with the activity map.

Figure 6 schematically illustrates an embodiment of a server device 200 for streaming video content. More in particular, figure 6 illustrates a server device 200 for streaming encoded video content regarding a scene to a client device 100. In preferred embodiments the video content comprises a sequence of video images regarding a scene comprising a substantially static panorama and, optionally, one or more moving objects within the substantially static panorama. The video content may for example comprise a 360° panoramic scene captured by a fixed video camera, wherein moving objects may occur. The server device 200 comprises a video image obtaining unit 610 configured to obtain from the video content a video image representing the scene. The video image corresponds with a frame of the video content. The server device 200 comprises an information receiving unit 620 configured to receive region of interest information from the client device 100. When the client device 100 is a HMD, the region of interest information may comprise client command data being indicative for the orientation of the HMD, the view direction or a line of sight of the user of the HMD, etc. The obtained video image is input to an extracting unit 640 together with the received region of interest information. The extracting unit 640 is configured to extract a region of interest image from the obtained video image based on the received region of interest information and optionally to generate corresponding metadata which is provided to the sending unit 690. The extracting unit 640 matches the received region of interest information with the obtained video image and determines which content to include in the region of interest image. Since this region of interest image is considered to be the content which required to be updated, this extracted region of interest image may be encoded in high quality before being sent to the client device 100. This is done by encoding unit 650 and sending unit 690, respectively, which does not only send the encoded field of view image to the client device 100 but also the generated field of view metadata. The metadata allows for the client device 100 to identify to which part of a hitherto accumulated client panorama image the region of interest image corresponds. This hitherto accumulated client panorama image is an image having the same dimensions as the obtained video image, and which is built by positioning the determined high quality regions of interest within the panorama image based on the determined region of interest information and/or the corresponding generated metadata. In other words, in stead of encoding and sending one large panorama image in 4K, which would lead to lower than HD resolution for an actual field of view of the user, the server device and client device each build a panorama image comprising of multiple high resolution region of interest images. This client panorama image is said to be hitherto accumulated because it is constituted by previously determined region of interest images. The client device 100 builds, accumulates or "paints" a client panorama image by consecutively updating the predetermined panorama image based on newly received region of interest images. However, the server device 200 also generates this client panorama image, independently from the client device 100, in order to be aware of the generated panorama image at the client device side 100. More in particular, in addition to being sent to the client device 100, the encoded region of interest image is decoded within the decoding unit 660 of the server device 200, and consequently the decoded region of interest image is combined with the hitherto accumulated client panorama image in the combination unit 670. The hitherto accumulated client panorama image is stored in the storing unit 680 and corresponds with the client panorama image or client panorama frame as built at the client device 100. The feature that both the server device 100 and the client device 200, independently from each other, generate and update the hitherto accumulated client panorama image allows for the server device 200 to send high quality encoded region of interest images and for the client device 100 to further built, paint, combine or update the entire hitherto accumulated client panorama image based on the high quality encoded region of interest images and optionally their corresponding metadata.

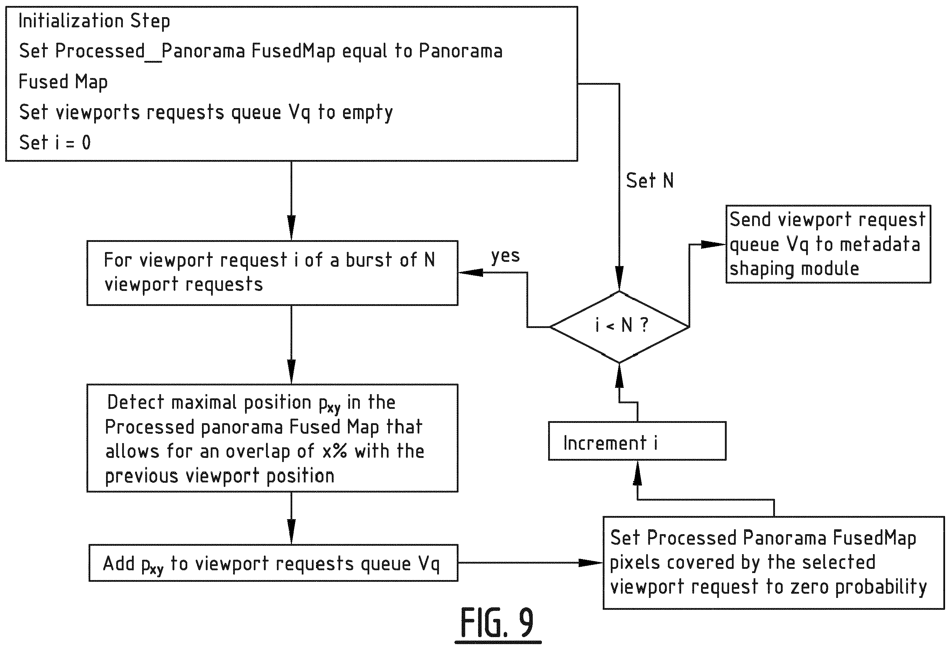

Figure 9 illustrates a possible embodiment of determining which regions of interest should be requested based on combinatorial optimization, e.g. region-growing algorithms, from the latest region of interest position or the latest field of view position . A possible embodiment consists in centring the next viewport at the position that received the maximum value on the fused map and allow for an overlap with the previous viewport position of a certain amount that is defined as a parameter that enables better compression, e.g. the overlapped area can be motion compensated from the previous region of interest or field of view position. The decision of the best panorama filling path then iteratively covers the panorama reference frame by always selecting the next maximal position in the fused map that allows for a that particular amount of overlap with the previously selected region of interest or field of view position. This selection of regions of interest to be requested is preferably done faster than the actual framerate, otherwise the fused map would always be updated at a next region of interest request. This approach should enable to cover a significant portion of the viewer panorama heatmap, or at the start of the session, for example a quarter of the sphere maximized based on previous session panorama heatmaps and panorama probability map.

The client device may send region of interest requests to the server in the following manner. At initialization or after a scene cut detection, the client device may send a burst of region of interest requests. For all other moments of the session, the client device may request the region of interest based on the same techniques as for the bursts, but requests only one region of interest per frame. The server device preferably deals in priority with the burst requests and only processes next single region of interest requests per frame once the burst requests have been addressed.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the proposed approach. It will thus be appreciated that those skilled in the art will be able to devise various arrangements that, although not explicitly described or shown herein, embody the principles of the proposed approach and are included within its scope. Furthermore, all examples recited herein are principally intended expressly to be only for pedagogical purposes to aid the reader in understanding the principles of the proposed approach and the concepts contributed by the inventor(s) to furthering the art, and are to be construed as being without limitation to such specifically recited examples and conditions. Moreover, all statements herein reciting principles, aspects, and embodiments of the proposed approach, as well as specific examples thereof, are intended to encompass equivalents thereof.

The functions of the various elements shown in the figures, including any functional blocks labelled as "processors" or "units", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the proposed approach. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the proposed approach and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The proposed approach can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present disclosure, expressions such as "comprise", "include", "have", "may comprise", "may include", or "may have" indicate existence of corresponding features but do not exclude existence of additional features.

Whilst the principles of the proposed approach have been set out above in connection with specific embodiments, it is to be understood that this description is merely made by way of example and not as a limitation of the scope of protection which is determined by the appended claims.

## Claims

1. Client device for receiving and rendering encoded video content from a server device, the client device comprising:

   - at least one processor; and
   - at least one memory including computer program code;
   the at least one memory and the computer program code configured to, with the at least one processor, cause the client device at least to perform:

     - determine for pixels of a hitherto accumulated client panorama image a corresponding pixel update priority;
     - determine a region of interest such that the region of interest comprise a plurality of pixels of the hitherto accumulated client panorama image, wherein each pixel of the plurality of pixels has a pixel update priority which is higher than a priority threshold;
     - determine corresponding region of interest information;
     - send the determined region of interest information to the server device;
     - receive an encoded region of interest image and generated region of interest metadata from the server device;
     - decode the encoded region of interest image;
     - determine a combination image by combining the region of interest image with the hitherto accumulated client panorama image based on the generated region of interest metadata;
     - store the determined combination image as an updated hitherto accumulated client panorama image; and
     - render the determined combination image.

2. Client device according to claim 1, wherein the at least one memory and the computer program code are further configured to, with the at least one processor, cause the client device at least to further perform:

     - determine for pixels of the hitherto accumulated client panorama image a corresponding pixel activity, wherein the pixel activity is representative for a change in pixel value over time;

wherein the pixel update priority is determined based on at least the pixel activity of the respective pixel.

3. Client device according to claim 2, wherein the at least one memory and the computer program code are further configured to, with the at least one processor, cause the client device at least to further perform:

   - determine pixel activity based on a period of time which has passed since the pixel value of the respective pixel was last updated.

4. Client device according to claim 2 or 3, wherein the at least one memory and the computer program code are further configured to, with the at least one processor, cause the client device at least to further perform:

   - determine pixel activity based on a probability that the respective pixel will be associated with a moving object; and/or
   - determine pixel activity based on the pixel value of the respective pixel being empty.

5. Client device according to anyone of the preceding claims, wherein the at least one memory and the computer program code are further configured to, with the at least one processor, cause the client device at least to further perform:

   - determine a field of view, wherein the field of view corresponds with a plurality of pixels of the hitherto accumulated client panorama which can be seen by a user of the client device;
   - determine for pixels of the hitherto accumulated client panorama image a corresponding pixel probability, wherein the pixel probability is representative for a probability that the respective pixel will be comprised in a future field of view, based on at least one previously determined field of view; and
   - determine for pixels of the hitherto accumulated client panorama image the pixel update priority based on at least the determined corresponding pixel probability.

6. Client device according to claim 6, wherein the at least one memory and the computer program code are further configured to, with the at least one processor, cause the client device at least to further perform:

   - determine the pixel probability based on at least one statistical parameter related to the at least one previously determined field of view wherein the at least one statistical parameter comprises any one of a positional bias, convergent speed bias, divergent speed bias.

7. Client device according to any one of the preceding claims 2-7 wherein the at least one memory and the computer program code are further configured to, with the at least one processor, cause the client device at least to further perform:

   - determine pixel activity based on a period of time which has passed since the pixel was comprised in a field of view.

8. Client device according to any one of the preceding claims, wherein the at least one memory and the computer program code are further configured to, with the at least one processor, cause the client device at least to perform:

   - determine the region of interest based on at least one of pixel update priority and amount of overlap with the previously determined region of interest.

9. Client device according to any one of the preceding claims, wherein the encoded region of interest image is an adapted region of interest image and wherein the at least one memory and the computer program code are further configured to, with the at least one processor, cause the client device at least to perform:

   - determine a combination image by combining the adapted region of interest image with the hitherto accumulated client panorama image.

10. Client device according to any one of the preceding claims, wherein the at least one memory and the computer program code are further configured to, with the at least one processor, cause the client device at least to perform:

    - determine a plurality of regions of interest; and

- send the determined plurality of regions of interest in burst to the server device.

11. Server device for streaming encoded video content to a client device, the server device comprising:

- at least one processor; and
- at least one memory including computer program code;
the at least one memory and the computer program code configured to, with the at least one processor, cause the server device at least to perform:

- obtain from the video content a video image;
- receive region of interest information from the client device;
- extract a region of interest image from the obtained video image based on the received region of interest information;
- encode the extracted region of interest image;
- decode the encoded region of interest image;
- determine a combination image by combining the decoded region of interest image with a hitherto accumulated client panorama image;
- store the determined combination image as an updated hitherto accumulated client panorama image; and

- send the encoded region of interest image to the client device.

12. Server device according to claim 11, wherein the at least one memory and the computer program code are further configured to, with the at least one processor, cause the server device at least to perform:

- receive a plurality of region of interest informations in burst from the client device;
- extract a plurality of corresponding region of interest images from the obtained video image;
- encode the plurality of extracted region of interest images;
- decode the plurality of encoded region of interest images;
- determine the combination image by combining the decoded plurality of region of interest images with the hitherto accumulated client panorama image; and
- send the encoded plurality of region of interest images in burst to the client device.

13. Server device according to claim 11 or 12, wherein the at least one memory and the computer program code are further configured to, with the at least one processor, cause the server device at least to perform:

- compare the extracted region of interest image with a corresponding section of the hitherto accumulated client panorama image, and determine an adapted region of interest image based on a difference between the extracted region of interest image and the corresponding section of the hitherto accumulated client panorama image;
- encode the adapted region of interest image;
- decode the encoded adapted region of interest image;
- determine a combination image by combining the decoded adapted region of interest image with the hitherto accumulated client panorama image;
- store the determined combination image as an updated hitherto accumulated client panorama image; and
- send the encoded adapted region of interest image to the client device.

14. A method for receiving and rendering encoded video content from a server device, the method comprising the steps of:

- determining for pixels of a hitherto accumulated client panorama image a corresponding pixel update priority;
- determining a region of interest such that the region of interest comprise a plurality of pixels of the hitherto accumulated client panorama image, wherein each pixel of the plurality of pixels has a pixel update priority which is higher than a priority threshold;
- determining corresponding region of interest information; - sending the determined region of interest information to the server device;
- receiving an encoded region of interest image and generated region of interest metadata from the server device;
- decoding the encoded region of interest image;
- determining a combination image by combining the region of interest image with the hitherto accumulated client panorama image based on the generated region of interest metadata;
- storing the determined combination image as an updated hitherto accumulated client panorama image; and

- rendering the determined combination image.

**15.** A method for streaming encoded video content to a client device, the method comprising the steps of:

- obtaining from the video content a video image;
- receiving region of interest information from the client device;
- extracting a region of interest image from the obtained video image based on the received region of interest information;
- encoding the extracted region of interest image;
- decoding the encoded region of interest image;
- determining a combination image by combining the decoded region of interest image with a hitherto accumulated client panorama image;
- storing the determined combination image as an updated hitherto accumulated client panorama image; and
- sending the encoded region of interest image to the client device.

FIG. 1

FIG. 2

Equator Bias    2D panorama    sphere

Divergent mean speed    2D panorama    sphere

Lateral Bias (right)    2D panorama    sphere

Covergent mean speed    2D panorama    sphere

FIG. 3A

EP 3 634 005 A1

EP 3 634 005 A1

**FIG. 3B**

EP 3 634 005 A1

Viewer Field of view Position in persistent client panorama px,y(t)

Add to trajectory pile TP(t)={ px,y(t), px,y(t-1), ...., px,y(0)}

Update Trajectory derivatives

$TPD1x,y = \{(\partial\ px,y(t-1))/(\partial t),\ ...,\ (\partial px,y(0))/(\partial t)\}$

$TPD2x,y = \{(\partial 2\ px,y(t-1))/(\partial t2),\ ...,\ (\partial 2px,y(0))/(\partial t2)\}$

Update Persistent Panorama Reference Frame Heatmap H(t)

Update Persistent Panorama Reference Frame Age A(t)

Update Center of gravity of FOV positions over time in persistent panorama

$CoG(t)=$
{average_x(px,y(t), ...,px,y(0)),
average_y(px,y(t), ..., px,y(0))}

Update Positional Bias

$PB(t)=$
{Panorama_Center_x-CoG(t)[x],
Panorama_Center_y-CoG(t)[y]}

Update Convergent Speed Bias

Store Convergent Acceleration

Update Divergent Speed Bias

Store Divergent Acceleration

Fusion process

Panorama probability map

FIG. 3C

FIG. 4

```
┌─────────────────────────┐        ┌──────────────────┐
│ Reconstructed persistent│        │    Persistent    │
│ client panorama reference│──┐     │    Panorama      │
│         frame           │  │     │ Reference Frame  │────────────────────┐
└─────────────────────────┘  ├────▶│   scene cut      │                    │
┌─────────────────────────┐  │     │    Detector      │                    │
│    Decoded ROI image    │──┘     └──────────────────┘                    │
│   frame and metadata    │                 │                              │
└─────────────────────────┘                 ▼                              │
                                   ┌──────────────────┐                    │
                                   │ Scene_cut_event  │                    │
┌─────────────────────────┐       └──────────────────┘                    │
│   Viewer FOV position   │──┐              │                              │
└─────────────────────────┘  │              ▼                              ▼
                             │       ┌─────────────┐          ┌──────────────────┐
┌─────────────────────────┐  ├──────▶│             │          │      ROI in      │
│  Panorama activity map  │──┤       │   Fusion    │          │ panorama request │
└─────────────────────────┘  │       │             │     ┌───▶│ metadata shaping │
                             │       └─────────────┘     │    └──────────────────┘
┌─────────────────────────┐  │              │            │              │
│ Panorama probability map│──┘              ▼            │              │
└─────────────────────────┘       ┌──────────────────┐   │              │
                                   │ Optimized persistent│ │              │
                                   │ panorama filling  │──┘              │
                                   │    Trajectory    │                 │
                                   └──────────────────┘                 │
                                                                        ▼
                                                            ┌──────────────────┐
                                              FIG. 5        │ ROI to be requested│
                                                            └──────────────────┘
```

FIG. 5

FIG. 6

FIG. 7

FIG. 8

EP 3 634 005 A1

Initialization Step

Set Processed_Panorama FusedMap equal to Panorama Fused Map

Set viewports requests queue Vq to empty

Set i = 0

For viewport request i of a burst of N viewport requests

Detect maximal position $p_{xy}$ in the Processed panorama Fused Map that allows for an overlap of x% with the previous viewport position

Add $p_{xy}$ to viewport requests queue Vq

Set Processed Panorama FusedMap pixels covered by the selected viewport request to zero probability

Increment i

i < N ?

yes

Set N

Send viewport request queue Vq to metadata shaping module

FIG. 9

Europäisches
Patentamt

European
Patent Office

Office européen
des brevets

# EUROPEAN SEARCH REPORT

**Application Number**

EP 18 19 8943

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 490 179 A1 (ALCATEL LUCENT [FR]) 22 August 2012 (2012-08-22) * paragraph [0003] - paragraph [0055] * * claims 1-15 * * figures 1-3 * | 1,11,14, 15 | INV. H04N21/4728 H04N5/232 G02B27/01 |
| A | WO 2006/016782 A1 (UNIV INDUSTRY ACADEMIC COOPERA [KR]; SAMSUNG ELECTRONICS CO LTD [KR]) 16 February 2006 (2006-02-16) * paragraph [0022] - paragraph [0049] * * figures 2-5 * | 1,11,14, 15 | |

**TECHNICAL FIELDS SEARCHED (IPC)**

H04N
G02B

The present search report has been drawn up for all claims

| Place of search | Date of completion of the search | Examiner |
|---|---|---|
| The Hague | 31 January 2019 | Etienne, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 8943

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2019

| Patent document cited in search report | | Publication date | Patent family member(s) | | Publication date |
|---|---|---|---|---|---|
| EP 2490179 | A1 | 22-08-2012 | EP | 2490179 A1 | 22-08-2012 |
| | | | ES | 2675802 T3 | 12-07-2018 |
| WO 2006016782 | A1 | 16-02-2006 | EP | 1782632 A1 | 09-05-2007 |
| | | | JP | 2008510357 A | 03-04-2008 |
| | | | WO | 2006016782 A1 | 16-02-2006 |

EPO FORM P0459

For more details about this annex : see Official Journal of the European Patent Office, No. 12/82

**EP 3 634 005 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 18152612 A